# EUROPEAN PATENT APPLICATION

(11) **EP 4 386 944 A1**
(43) Date of publication of application: **19.06.2024**
(21) Application number: 22306912.1
(22) Date of filing: 16.12.2022
(51) Int. Cl.: H01M 50/103, H01M 50/105, H01M 50/536, H01M 50/538, H01M 50/54

(54) **BATTERY CELL AND METHOD OF ASSEMBLY**

(71) Applicant: Automotive Cells Company SE, 92300 Levallois Perret (FR)
(72) Inventor: Choi, Hangjune, 33200 Bordeaux (FR)
(74) Representative: Alatis

(57) **Abstract**

A battery cell comprises at least a first current collector (32) and a stack of electrodes (12) provided with a first multi-layered bundle (24) of flexible electrode tabs (16) protruding from a side (18) of said stack of electrodes (12). The flexible electrode tabs (16) are welded to one another, but not to the first current collector (32), in at least one first welding zone (26) of the first multi-layered bundle (24) of flexible electrode tabs. The first multi-layered bundle (24) of flexible electrode tabs is welded to the first current collector (32) in a second welding zone (36) of the first multi-layered bundle (24) of flexible electrode tabs. The second welding zone (36) and the first welding zone (26) do not overlap and are positioned next to each other or spaced apart in a direction parallel to a width dimension (W) of the flexible electrode tabs (16).

## Description

### TECHNICAL FIELD OF THE INVENTION

The present invention relates to a battery cell and, more particularly to, a battery cell with a welded connection between flexible electrode tabs and one or more current collectors. It also relates to a method of assembling such a battery cell. It relates in particular, albeit not exclusively, to a prismatic battery cell.

### BACKGROUND ART

A prismatic battery cell usually comprises at least one stack of electrodes, two current collectors and a plurality of flexible electrode tabs which connect the cathodes of the stack of electrodes to one of the current collectors and the anodes to the other current collector. More specifically, the electrode tabs of same polarity form a multi-layered bundle, which is welded to the current collector of same polarity. The welding operation is performed in two steps: a first step of welding the plurality of electrode tabs of same polarity together, followed by a second step of welding the pre-welded bundle of tabs to the current collector of same polarity. When the two aforementioned welding operations are applied to the same zone of the tabs, the quality of the weld is poor, because the first welding step results in work-hardening of the tabs, which degrades their mechanical and structural properties and thereby may lead to weak adhesion between the tabs and the current collector in the second welding step.

A weak adhesion means that it becomes difficult to secure reliable mechanical and electrical connections between the tabs and collectors, which is essential for the product, after welding. Moreover, it results in higher electrical resistance, and therefore to heat generation when in use, which can affect the performance and lifespan of the battery cell.

It has been suggested in US2021305620 to disperse the location where the plurality of bundled current collector tabs are joined to the lead terminal among two or more locations. Whereby, the bundled current collector tabs are joined to each other at a first position, also referred to as first welding zone. Subsequently, the lead terminal and the bundled current collector tabs are joined at a second position, different to the first and referred to as second welding zone. The first welding zone is closer to the stack of electrodes than the second welding zone and, if required, the bundle of tabs can be bent in a region between the first welding zone and second welding zone. This arrangement, however, requires longer tabs. Moreover, the bending of the tabs may be affected by the first welding zone.

### SUMMARY OF THE INVENTION

In light of the aforementioned background art, the present invention aims to provide a secure connection between the electrode tabs and the current collectors of a battery cell in a compact layout.

According to a first aspect of the invention, there is provided a battery cell, e.g. a prismatic battery cell or a pouch battery cell, comprising at least: a first current collector and a stack of electrodes provided with a first multi-layered bundle of flexible electrode tabs protruding from a side of said stack of electrodes. The flexible electrode tabs of the first multi-layered bundle of flexible electrode tabs have a width dimension parallel to the side of the stack of electrodes and to a reference axis of the battery cell. The flexible electrode tabs of the first multi-layered bundle of flexible electrode tabs are welded to one another but not to the first current collector in at least one first welding zone of the first multi-layered bundle of flexible electrode tabs. The first multi-layered bundle of flexible electrode tabs is welded to the first current collector in a second welding zone of the first multi-layered bundle of flexible electrode tabs. More than 50% of the surface of the second welding zone and more than 50% of the surface of the first welding zone of the first multi-layered bundle of flexible electrode tabs do not overlap and are positioned next to each other or spaced apart in a direction parallel to the reference axis. Preferably to whole of the second welding zone and of the first welding zone do not overlap and are positioned next to each other or spaced apart in a direction parallel to the reference axis. As the first and second welding zones are dispersed along the width dimension of the electrode tabs, a length dimension of the electrode tabs, which is perpendicular to the width direction, can be kept small.

In a preferred embodiment, the first multi-layered bundle of flexible electrode tabs is bendable about a first bending axis parallel to the reference axis, the second welding zone and the first welding zone of the first multi-layered bundle of flexible electrode tabs being located on one side of the bending axis opposed to the stack of electrodes. As the electrode tabs are free from welding zones along their length dimension, between the stack of electrodes and the current collector, they can be bent, as required, without weakening the welded joints.

In a preferred embodiment, the flexible electrode tabs of the first multi-layered bundle of flexible electrode tabs are welded to one another but not to the first current collector in at least a further first welding zone of the first multi-layered bundle of flexible electrode tabs. More than 50%, and preferably all, of the second welding zone and of the further first welding zone of the first multi-layered bundle of flexible electrode tabs do not overlap and are positioned next to each other or spaced apart in a direction parallel to the reference axis. The second welding zone of the first multi-layered bundle of electrode tabs is located in a gap between the first welding zone and the further first welding zone of the first multi-layered bundle of electrode tabs in a direction parallel to the reference axis. By virtue of two first welding zones spaced apart from one another, the position of the bundle of electrode tabs can be controlled in the second welding step, whereby the bundle of electrodes is joined to the current collector in the second welding zone.

The flexible electrode tabs of the first multi-layered bundle of flexible electrode tabs are preferably foils, i.e. their thickness is at least 10 times less than their width.

In one embodiment, the first current collector has a flat face to which the second welding zone of the first multi-layered bundle of flexible electrode tabs is welded, wherein the first welding zone, and, if applicable, the further first welding zone of the first multi-layered bundle of flexible electrode tabs rest on areas of the flat face. The first welding zone(s) of the bundle of flexible electrode tabs rests on the flat face of the first current collector, which protects the first welding zones from potential mechanical damage during the assembly process.

In a preferred embodiment, the same layout is adopted for both poles of the stack of electrodes, i.e., for anodes and cathodes. To this end, the battery cell may further comprise a second current collector and the stack of electrodes is provided with a second multi-layered bundle of flexible electrode tabs and protruding from the side of said stack of electrodes. The flexible electrode tabs of the second multi-layered bundle of flexible electrode tabs have a width dimension parallel to the side of the stack of electrodes and to the reference axis of the battery cell. The flexible electrode tabs of the second multi-layered bundle of flexible electrode tabs are welded to one another but not to the second current collector in at least one first welding zone of the second multi-layered bundle of flexible electrode tabs. The second multi-layered bundle of flexible electrode tabs is welded to the second current collector in a second welding zone of the second multi-layered bundle of flexible electrode tabs. More than 50%, and preferably all, of the second welding zone and of the first welding zone of the second multi-layered bundle of flexible electrode tabs do not overlap and are positioned next to each other or spaced apart in a direction parallel to the reference axis.

The flexible electrode tabs of the second multi-layered bundle of flexible electrode tabs are preferably foils.

The first current collector and the second current collector are preferably spaced apart from one another in a direction parallel to the reference axis.

Preferably, the second multi-layered bundle of flexible electrode tabs is bendable about a second bending axis parallel to the reference axis, the second welding zone and the first welding zone of the second multi-layered bundle of flexible electrode tabs being located on one side of the second bending axis opposed to the stack of electrodes. The first and second bending axes can be coaxial or parallel to one another.

In a preferred embodiment, the flexible electrode tabs of the second multi-layered bundle of flexible electrode tabs are welded to one another but not to the second current collector in at least a further first welding zone of the second multi-layered bundle of flexible electrode tabs. More than 50% of the surface of, and preferably the whole of, the second welding zone and of the further first welding zone of the second multi-layered bundle of flexible electrode tabs do not overlap and are positioned next to each other or spaced apart in a direction parallel to the reference axis. The second welding zone of the second multi-layered bundle of electrode tabs is located in a gap between the first welding zone and the further first welding zone of the second multi-layered bundle of electrode tabs in a direction parallel to the reference axis.

Advantageously, a flat face of the second current collector is welded to the second welding zone of the second multi-layered bundle of flexible electrode tabs, wherein the first welding zone, and, if applicable, the further first welding zone of the second multi-layered bundle of flexible electrode tabs rest on areas of the flat face of the second current collector.

According to another aspect of the invention, there is provided a method of assembling a battery cell, e.g. a prismatic battery cell or a pouch battery cell, comprising, at least:
- providing a first current collector,
- providing a stack of electrodes with a first multi-layered bundle of flexible electrode tabs protruding from a side of the stack of electrodes, the flexible electrode tabs of the first multi-layered bundle of flexible electrode tabs having a width dimension parallel to the side of the stack of electrodes and to a reference axis of the battery cell,
- welding the flexible electrode tabs of the first multi-layered bundle of flexible electrode tabs to one another but not to the first current collector in at least one first welding zone of the first multi-layered bundle of flexible electrode tabs, and
- subsequently welding the first multi-layered bundle of flexible electrode tabs to the first current collector in a second welding zone of the first multi-layered bundle of flexible electrode tabs, such that the second welding zone and the first welding zone of the first multi-layered bundle of flexible electrode tabs do not overlap and are positioned next to each other or spaced apart in a direction parallel to the reference axis.

In one embodiment, the method further comprises: welding the flexible electrode tabs of the first multi-layered bundle of flexible electrode tabs to one another but not to the first current collector in at least a further first welding zone of the first multi-layered bundle of flexible electrode tabs, wherein more than 50% of the surface of the second welding zone and of the further first welding zone of the first multi-layered bundle of flexible electrode tabs do not overlap and are positioned next to each other or spaced apart in a direction parallel to the reference axis, and wherein the second welding zone of the first multi-layered bundle of electrode tabs is located between the first welding zone and the further first welding zone of the first multi-layered bundle of electrode tabs in a direction parallel to the reference axis.

In one embodiment, the method further comprises:
- providing a second current collector,
- providing the stack of electrodes with a second multi-layered bundle of flexible electrode tabs protruding from the side of the stack of electrodes, the flexible electrode tabs of the second multi-layered bundle of flexible electrode tabs having a width dimension parallel to the side of the stack of electrodes and to the reference axis of the battery cell,
- welding the flexible electrode tabs of the second multi-layered bundle of flexible electrode tabs to one another but not to the second current collector in at least one first welding zone of the second multi-layered bundle of flexible electrode tabs, and
- subsequently welding the second multi-layered bundle of flexible electrode tabs to the second current collector in a second welding zone of the second multi-layered bundle of flexible electrode tabs, wherein more than 50% of the surface of the second welding zone and of the first welding zone of the second multi-layered bundle of flexible electrode tabs do not overlap and are positioned next to each other or spaced apart in a direction parallel to the reference axis.

In one embodiment, the method further comprises welding the flexible electrode tabs of the second multi-layered bundle of flexible electrode tabs to one another but not to the second current collector in at least a further first welding zone of the second multi-layered bundle of flexible electrode tabs, wherein more than 50% of the surface of the second welding zone and of the further first welding zone of the second multi-layered bundle of flexible electrode tabs do not overlap and are positioned next to each other or spaced apart in a direction parallel to the reference axis, and wherein the second welding zone of the second multi-layered bundle of electrode tabs is located between the first welding zone and the further first welding zone of the second multi-layered bundle of electrode tabs, in a direction parallel to the reference axis.

In one embodiment, the step of welding the flexible electrode tabs of the first multi-layered bundle of flexible electrode tabs to one another but not to the first current collector in at least one first welding zone of the first multi-layered bundle of flexible electrode tabs is performed by ultrasonic vibration welding. The first welding, which joins the flexible electrode tabs together to a bundle, is a multi-layer lap welding. It needs to form multiple welded joints at every contact between these multiple layers of the tabs in a shot, and ultrasonic vibration welding is a good choice for this requirement. The materials of the flexible electrode tabs are pure copper and pure aluminium, and welding these materials with the currently commercially available laser beam is a challenge as the absorptivity of the electrode tabs is relatively low. Moreover, it is very difficult to suppress spatters produced during the welding, which can contaminate the electrodes under work in progress. Similarly, the step of subsequently welding the first multi-layered bundle of flexible electrode tabs to the first current collector in the second welding zone of the first multi-layered bundle of flexible electrode tabs is preferably performed by ultrasonic vibration welding.

### BRIEF DESCRIPTION OF THE FIGURES

Other advantages and features of the present invention will become readily apparent from the following description of a specific embodiment of the invention. The specific embodiment is herein described as a non-limiting example only, represented in the accompanying drawings, in which:
- figure 1 is a schematic isometric view of a stack of electrodes of a prismatic battery cell, at the end of a first welding step of assembly, according to an embodiment of the invention;
- figure 2 is a schematic isometric view of the stack of electrodes of figure 1 connected to a pair of current collectors at the end of a subsequent welding step of assembly.

Corresponding reference numerals refer to the same or corresponding parts in each of the figures.

### DETAILED DESCRIPTION OF PREFERRED EMBODIMENTS

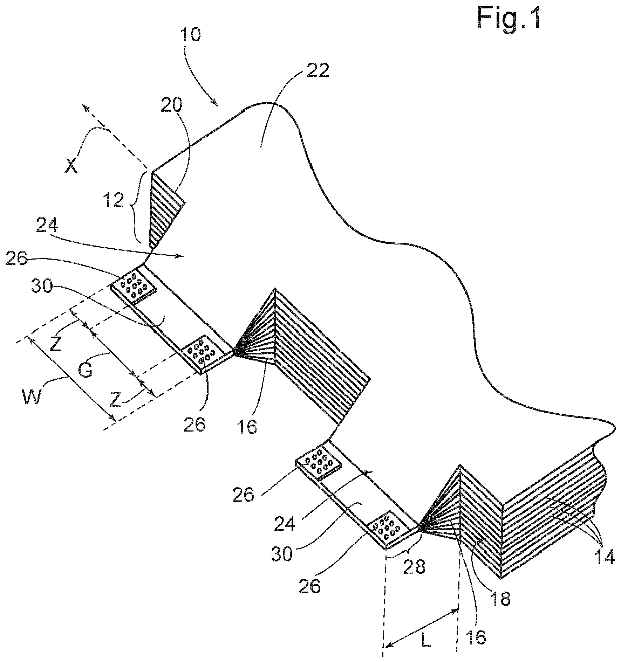

With reference to figure **1****,** a body **10** of a prismatic battery cell comprises a stack **12** of electrodes **14,** which is a repetitive arrangement of layers composed of a positive electrode, a separator, a negative electrode, and a separator.

The electrodes **14** are provided with flexible electrode tabs **16,** which project from one side **18** of the stack **12** of electrodes. The electrode tabs **16** are foils with a length dimension **L** perpendicular to the side **18** of the stack **12** of electrodes **14,** a width dimension **W** parallel to the side **18** of the stack **12** of electrodes **14,** and a thickness substantially smaller, e.g., at least **10** times smaller, than the width **W and** length **L** dimensions. The width dimension **W** of the electrode tabs **16** is parallel to a reference axis **X** of the prismatic battery cell, which is also parallel to an edge **20,** between the side **18** and a top **22** of the stack **12** of electrodes **14.** The electrode tabs **16** connected to the positive electrodes are spaced apart from the electrode tabs **16** connected to the negative electrodes, along the reference direction **X.** The electrode tabs **16** of each polarity are placed on top of each other and grouped together to form a multi-layered bundle **24** of electrode tabs **16** of the same polarity.

In figure **1****,** the multiple layers of electrode tabs **16** are shown following bundling and welding in two zones **26** of the electrode tabs, which are located at a free end **28** of the tabs in the length direction **L** and spaced apart from one another in the width direction **W** of the tabs. This welding operation will be referred to as first welding, and is preferably performed before a second welding operation described below. The width **G** of a gap **30** between the two first welding zones **26,** measured in the width direction **W,** parallel to the reference axis **X,** is preferably greater than a width **Z** of each of the first welding zones **26,** and in this example, about twice the width dimension **Z** of the first welding zones.

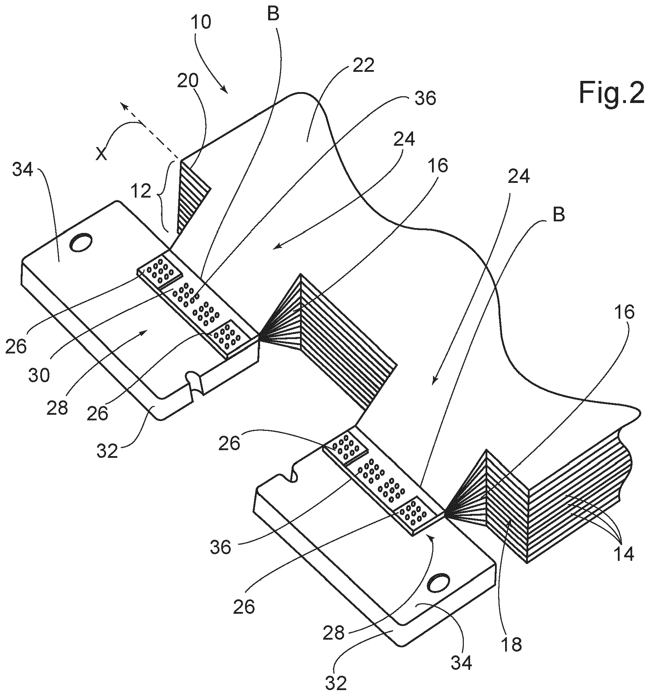

In figure **2****,** the two multi-layered bundles **24** of electrode tabs **16** have been welded to a positive and a negative current collector **32,** respectively, during the so-called second welding operation. Each current collector **32** has a flat face **34,** on which the free end **28** of the associated bundle **24** of electrode tabs **16** rests, including the two first welding zones **26** and the gap **30** between them. The second welding operation takes place in this gap **30** and forms a second welding zone **36** of the bundle **24** of electrode tabs **16.** The second welding zone **36** is next to, or preferably spaced apart from, each of the first welding zones **26,** so that no overlap between the second welding zone **36** and the first welding zones **26** occurs.

Each of the multi-layered bundles **24** of flexible electrode tabs **16** is preferably bendable about a bending axis **B,** parallel to the reference axis **X,** which provides some degree of freedom to fold/bend the tabs for subsequent processes of the battery cell assembly after the welding operations. The second welding zone **36** and the first welding zones **26** of each multi-layered bundle **24** of flexible electrode tabs **16** are located on one side of the bending axis **B** opposed to the stack of electrodes **12.**

Preferably, the first welding and second welding operations are performed by friction or ultrasonic vibration welding. The structure of the flexible electrode tabs **16** is modified during each welding operation. However, each welding operation is performed on a "fresh" zone of the tabs, which has not yet been modified by previous welding. This ensures that the welding conditions are precisely controlled and that the resulting joints have the expected mechanical properties.

The invention has been described for a prismatic battery cell, but is also applicable to a pouch battery cell.

## Claims

1. A battery cell, comprising at least:
- a first current collector (32), and
- a stack of electrodes (12), provided with a first multi-layered bundle (24) of flexible electrode tabs (16) protruding from a side (18) of the stack of electrodes (12), the flexible electrode tabs (16) of the first multi-layered bundle (24) of flexible electrode tabs (16) having a width dimension (W) parallel to the side (18) of the stack of electrodes (12) and to a reference axis (X) of the battery cell, the flexible electrode tabs (16) of the first multi-layered bundle (24) of flexible electrode tabs (16) being welded to one another but not to the first current collector (32) in at least one first welding zone (26) of the first multi-layered bundle (24) of flexible electrode tabs (16), and the first multi-layered bundle (24) of flexible electrode tabs (16) being welded to the first current collector (32) in a second welding zone (36) of the first multi-layered bundle (24) of flexible electrode tabs (16),
**characterised in that** more than 50% of a surface of the second welding zone (36) and of the first welding zone (26) of the first multi-layered bundle (24) of flexible electrode tabs (16) do not overlap and are positioned next to each other or spaced apart in a direction parallel to the reference axis (X).

2. The battery cell of claim 1, wherein the first multi-layered bundle (24) of flexible electrode tabs (16) is bendable about a first bending axis (B) parallel to the reference axis (X), the second welding zone (36) and the first welding zone (26) of the first multi-layered bundle (24) of flexible electrode tabs (16) being located on one side of the bending axis (X) opposed to the stack of electrodes (12).

3. The battery cell of any one of the preceding claims, wherein the flexible electrode tabs (16) of the first multi-layered bundle (24) of flexible electrode tabs (16) are welded to one another but not to the first current collector (32) in at least a further first welding zone (26) of the first multi-layered bundle (24) of flexible electrode tabs (16),
wherein the second welding zone (36) and the further first welding zone (26) of the first multi-layered bundle (24) of flexible electrode tabs (16) do not overlap and are positioned next to each other or spaced apart in a direction parallel to the reference axis (X), and
wherein the second welding zone (36) of the first multi-layered bundle (24) of electrode tabs (16) is located in a gap (30) between the first welding zone (26) and the further first welding zone (26) of the first multi-layered bundle (24) of electrode tabs (16) in a direction parallel to the reference axis (X).

4. The battery cell of any one of the preceding claims, wherein the first current collector (32) has a flat face (34) to which the second welding zone (36) of the first multi-layered bundle (24) of flexible electrode tabs (16) is welded, wherein the first welding zone (26), and, if applicable, the further first welding zone (24) of the first multi-layered bundle (24) of flexible electrode tabs (16) rest on areas of the flat face (34).

5. The battery cell of any one of the preceding claims, further comprising:
- a second current collector (32), and
- wherein the stack of electrodes (12) is provided with a second multi-layered bundle (24) of flexible electrode tabs (16) protruding from the side (18) of the stack of electrodes (12), the flexible electrode tabs (16) of the second multi-layered bundle (24) of flexible electrode tabs (16) having a width dimension (W) parallel to the side (18) of the stack of electrodes (12) and to the reference axis (X) of the battery cell, the flexible electrode tabs (16) of the second multi-layered bundle (12) of flexible electrode tabs (16) being welded to one another but not to the second current collector (32) in at least one first welding zone (26) of the second multi-layered bundle (24) of flexible electrode tabs (16), and the second multi-layered bundle (24) of flexible electrode tabs (16) being welded to the second current collector (32) in a second welding zone (36) of the second multi-layered bundle (24) of flexible electrode tabs (16), wherein the second welding zone (36) and the first welding zone (26) of the second multi-layered bundle (24) of flexible electrode tabs (16) do not overlap and are positioned next to each other or spaced apart in a direction parallel to the reference axis (X).

6. The battery cell of claim 5, wherein the second multi-layered bundle (24) of flexible electrode tabs (16) is bendable about a second bending axis (B) parallel to the reference axis (X), the second welding zone (36) and the first welding zone (26) of the second multi-layered bundle (24) of flexible electrode tabs (16) being located on one side of the second bending axis (B) opposed to the stack of electrodes (12).

7. The battery cell of any one of claims 5 to 6, wherein the flexible electrode tabs (16) of the second multi-layered bundle (24) of flexible electrode tabs (16) are welded to one another but not to the second current collector (32) in at least a further first welding zone (26) of the second multi-layered bundle (24) of flexible electrode tabs (16), wherein
more than 50% of the surface of the second welding zone (36) and of the further first welding zone (26) of the second multi-layered bundle (24) of flexible electrode tabs (16) do not overlap and are positioned next to each other or spaced apart in a direction parallel to the reference axis (X), and
the second welding zone (36) of the second multi-layered bundle (24) of electrode tabs (16) is located in a gap (30) between the first welding zone (26) and the further first welding zone (26) of the second multi-layered bundle (24) of electrode tabs (16) in a direction parallel to the reference axis (X).

8. The battery cell of any one of claims 5 to 7, wherein a flat face (34) of the second current collector (32) is welded to the second welding zone (36) of the second multi-layered bundle (24) of flexible electrode tabs (16), wherein the first welding zone (26), and, if applicable, the further first welding zone (26), of the second multi-layered bundle (24) of flexible electrode tabs (16) rest on areas of the flat face (34) of the second current collector (32).

9. The battery cell of any one of the preceding claims, wherein the battery cell is a prismatic cell or a pouch cell.

10. A method of assembling a battery cell, in particular a prismatic battery cell or a pouch battery cell comprising, at least:
- providing a first current collector (32),
- providing a stack of electrodes (12) with a first multi-layered bundle (24) of flexible electrode tabs (16) protruding from a side (18) of the stack of electrodes (12), the flexible electrode tabs (16) of the first multi-layered bundle (24) of flexible electrode tabs having a width dimension (W) parallel to the side (18) of the stack of electrodes (12) and to a reference axis (X) of the battery cell,
- welding the flexible electrode tabs (16) of the first multi-layered bundle (24) of flexible electrode tabs (16) to one another but not to the first current collector (32) in at least one first welding zone (26) of the first multi-layered bundle of flexible electrode tabs (16), and
- subsequently welding the first multi-layered bundle (24) of flexible electrode tabs (16) to the first current collector (32) in a second welding zone (36) of the first multi-layered bundle (24) of flexible electrode tabs (16), such that more than 50% of the surface of the second welding zone (36) and of the first welding zone (26) of the first multi-layered bundle (24) of flexible electrode tabs (16) do not overlap, and are positioned next to each other or spaced apart in a direction parallel to the reference axis (X).

11. The method of claim 10, further comprising welding the flexible electrode tabs (16) of the first multi-layered bundle (24) of flexible electrode tabs (16) to one another but not to the first current collector (32) in at least a further first welding zone (26) of the first multi-layered bundle (24) of flexible electrode tabs (16), wherein
more than 50% of the surface of the second welding zone (36) and the further first welding zone (24) of the first multi-layered bundle (24) of flexible electrode tabs (16) do not overlap and are positioned next to each other or spaced apart in a direction parallel to the reference axis (X), and
the second welding zone (36) of the first multi-layered bundle (24) of electrode tabs (16) is located between the first welding zone (26) and the further first welding zone (26) of the first multi-layered bundle (24) of electrode tabs (16) in a direction parallel to the reference axis (16).

12. The method of any one of claims 10 to 11, further comprising:
- providing a second current collector (32),
- providing the stack of electrodes (12) with a second multi-layered bundle (24) of flexible electrode tabs (16) protruding from the side (18) of the stack of electrodes (12), the flexible electrode tabs (16) of the second multi-layered bundle (24) of flexible electrode tabs (16) having a width dimension (W) parallel to the side (18) of the stack of electrodes (12) and to the reference axis (X) of the battery cell,
- welding the flexible electrode tabs (16) of the second multi-layered bundle (24) of flexible electrode tabs (16) to one another but not to the second current collector (32) in at least one first welding zone (26) of the second multi-layered bundle (24) of flexible electrode tabs (16), and
- subsequently welding the second multi-layered bundle (24) of flexible electrode tabs (16) to the second current collector (32) in a second welding zone (36) of the second multi-layered bundle (24) of flexible electrode tabs (16), wherein more than 50% of the surface of the second welding zone (36) and of the first welding zone (26) of the second multi-layered bundle (24) of flexible electrode tabs (16) do not overlap and are positioned next to each other or spaced apart in a direction parallel to the reference axis (X).

13. The method of claim 12, further comprising welding the flexible electrode tabs (16) of the second multi-layered bundle (24) of flexible electrode tabs (16) to one another but not to the second current collector in at least a further first welding zone (26) of the second multi-layered bundle (24) of flexible electrode tabs (16), wherein
more than 50% of the surface of the second welding zone (36) and of the further first welding zone (26) of the second multi-layered bundle (24) of flexible electrode tabs (16) do not overlap and are positioned next to each other or spaced apart in a direction parallel to the reference axis (X), and
the second welding zone (36) of the second multi-layered bundle (24) of electrode tabs (16) is located between the first welding zone (26) and the further first welding zone (36) of the second multi-layered bundle (24) of electrode tabs (26), in a direction parallel to the reference axis (X).

14. The method of any one of claims 10 to 13, wherein welding the flexible electrode tabs (16) of the first multi-layered bundle (24) of flexible electrode tabs (16) to one another but not to the first current collector in at least one first welding zone (26) of the first multi-layered bundle (24) of flexible electrode tabs (16) is performed by ultrasonic vibration welding.

15. The method of any one of claims 10 to 14, wherein subsequently welding the first multi-layered bundle (24) of flexible electrode tabs (16) to the first current collector (32) in the second welding zone (36) of the first multi-layered bundle (24) of flexible electrode tabs (16) is performed by ultrasonic vibration welding.
